(19) Europäisches Patentamt
European Patent Office
Office européen des brevets

(11) EP 4 221 506 B1

(12) **EUROPEAN PATENT SPECIFICATION**

(45) Date of publication and mention of the grant of the patent:
**08.07.2026 Bulletin 2026/28**

(21) Application number: **21892656.6**

(22) Date of filing: **09.11.2021**

(51) International Patent Classification (IPC):
***A01N 25/02*** *(2006.01)* ***A01N 43/80*** *(2006.01)*
***C08K 5/00*** *(2006.01)* ***C09D 5/02*** *(2006.01)*
***C09D 5/14*** *(2006.01)* ***C09D 7/63*** *(2018.01)*
***A01P 1/00*** *(2006.01)*

(52) Cooperative Patent Classification (CPC):
(C-Sets available)
**C09D 5/025; A01N 43/80; A01P 1/00; C09D 5/14; C09D 7/63;** C08K 5/0058 (Cont.)

(86) International application number:
**PCT/US2021/058571**

(87) International publication number:
**WO 2022/103729 (19.05.2022 Gazette 2022/20)**

# (54) BIT COMPOSITIONS WITH SIGNIFICANTLY IMPROVED ACTIVITY

BIT-ZUSAMMENSETZUNGEN MIT SIGNIFIKANT ERHÖHTER AKTIVITÄT

COMPOSITIONS DE BIT PRÉSENTANT UNE ACTIVITÉ CONSIDÉRABLEMENT AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.11.2020 US 202063111937 P**

(43) Date of publication of application:
**09.08.2023 Bulletin 2023/32**

(73) Proprietor: **Troy Technology II, Inc.**
**Florham Park, New Jersey 07932 (US)**

(72) Inventors:
- **JACOBS, Jake Zachary**
**Morris Plains, NJ 07950 (US)**
- **YANG, Meihua**
**Hillsborough, NJ 08844 (US)**

(74) Representative: **Michalski Hüttermann & Partner mbB**
**Kaistraße 16A**
**40221 Düsseldorf (DE)**

(56) References cited:
**EP-A1- 0 482 328**
**EP-B1- 0 094 721**
**WO-A1-02/28952**
**WO-A1-2013/100117**
**WO-A1-2020/018356**
**US-A1- 2010 167 028**
**US-A1- 2012 189 603**
**US-A1- 2015 315 524**
**US-A1- 2017 295 796**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**A01N 43/80, A01N 25/02**

## Description

BACKGROUND OF THE INVENTION

1,2-benzisothiazolin-3-one (also referred to as "BIT") is known to be an effective bactericide in a variety of applications. BIT is currently one of the few remaining broadly effective formaldehyde-free preservatives that is stable at higher pH and effective as a long-term preservative.

While BIT has proven useful in a wide range of applications, it also has notable weaknesses. Specifically, BIT is a slow-acting preservative that has an unbalanced efficacy spectrum, particularly against some *Pseudomonas* species that are common to industrial spoilage. For this reason, effective preservation often requires blending BIT with additional biocidal ingredients to acceptable levels of preservation, but higher levels are limited by regulatory limits and required labeling. In Europe, products protected with >50 ppm BIT trigger the GHS statement "EUH208" and products protected with >500 ppm BIT require classification and H317 labeling as "Skin Sens; May cause an allergic skin reaction."

Given that these labels are undesirable to formulations and that BIT is not consistently effective below 500 ppm, and is especially not typically effective below 50 ppm, a synergistic and broadly effective BIT-based product is desired.

US 2010/167028 A1 relates to concentrated aqueous solutions of an anionic disazo dye, comprising salts and or the free acids of the anionic dye of the formula (I)

(I)

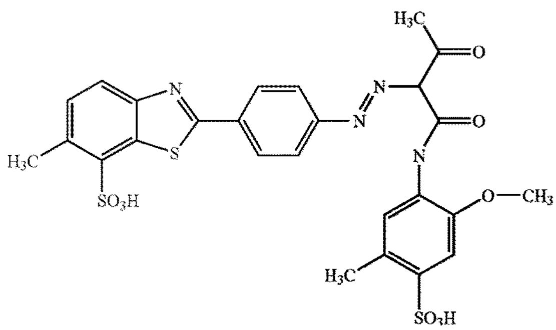

1,2-benzisothiazolin-3-one, Jeffamine T 403, and 2-(2-butoxyethoxy)ethanol and the use of these solutions for dyeing and/or printing hydroxyl-containing substrates and for producing inkjet inks.

EP 0 482 328 A1 relates to a liquid composition of 1,2-benzisothiazolin-3-one (BIT) and amines, if appropriate with a content of other solvents and customary additives, and characterised in that it contains, as amine, one or more amines of the general formula

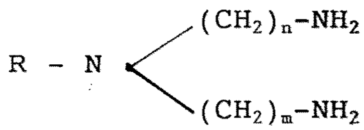

in which R denotes a straight-chain or branched alkyl or alkylene radical having 6 to 22 carbon atoms and n + m has a value of from 4 to 12; and to the use of a liquid composition in an amount of at least 0.05 to 0.3 % by weight as an agent against the destruction of material, caused by microbes, in water-containing or water-dilutable products such as plastics dispersions, colours, glues, compositions for coating paper, fabric conditioners, sizes, detergent base materials, cleaning and polishing agents, spinning baths, cooling lubricants, agents for treating leather, silicone emulsions and bitumen emulsions.

SUMMARY OF THE INVENTION

The present inventors have discovered that polyethertriamine synergy with BIT differentiates significantly from other amine and BIT combinations. This specific synergy of polyethertriamine and BIT is particularly useful for industrial protection of paints and colorants, providing equal protection to paints and colorants with significantly lower BIT concentrations over standard BIT products now used for wet state preservation.

In one aspect, the present invention relates to a preservative composition comprising (a) 1,2 benzisothiazolin-3-one and (b) at least one compound of the formula I:

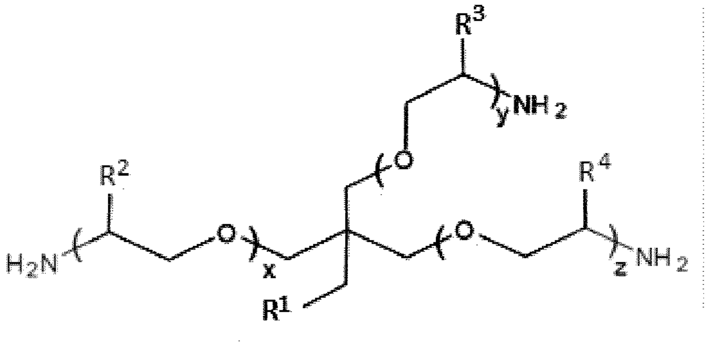

I,

wherein $R^1$ is H or $C_1$ to $C_9$ alkyl, $R^2$, $R^3$, and $R^4$ are independently H or $CH_3$, and x, y, and z are independently 1 to 10, and wherein (a) and (b) are present in a weight ratio (a):(b) of from 1:50 to 2:3. 1,2-benzisothiazolin-3-one is known also, and will be referred to herein, as "BIT".

In another aspect, the present invention relates to a preservative concentrate comprising the preservative composition comprising (a) 1,2 benzisothiazolin-3-one and (b) at least one compound of the formula I, wherein the concentrate comprises 1 to 45% w/w of (a), based on the weight of the concentrate.

In another aspect, the present invention relates to an industrial material comprising a preservative, the preservative comprising a combination of (a) 1,2 benzisothiazolin-3-one and (b) at least one compound of the formula I, wherein (a) and (b) are present in a weight ratio (a):(b) of from 1:50 to 2:3, and wherein (a) is present in the industrial material in a total amount of less than or equal to about 500 ppm.

In a further aspect, the present invention relates to a method of preserving an industrial material in the wet state, comprising adding to the industrial material an effective amount of a preservative that comprises (a) 1,2 benzisothiazolin-3-one and (b) a polyethertriamine of the formula I:

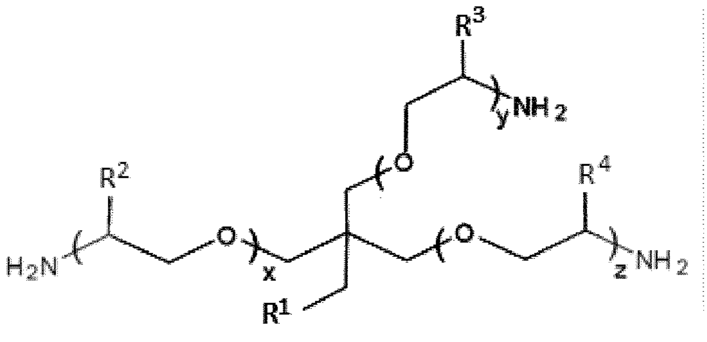

I,

wherein $R^1$ is H or $C_1$ to $C_9$ alkyl, $R^2$, $R^3$, and $R^4$ are independently H or $CH_3$, and x, y, and z are independently 1 to 10, and wherein (a) and (b) are present in a weight ratio (a):(b) of from 1:50 to 2:3.

These and other aspects will become apparent upon reading the following detailed description of the invention.

BRIEF DESCRIPTION OF THE DRAWINGS

FIG. 1 plots minimum inhibitory concentration (MIC) against *P. aeruginosa* and calculated synergy index (SI) for blends of BIT and polyethertriamine.

DETAILED DESCRIPTION OF THE INVENTION

It has now been surprisingly found in accordance with the present invention that a preservative composition containing 1,2-benzisothiazolin-3-one in combination with a polyethertriamine exhibits synergistic antimicrobial efficacy, as compared to BIT-containing compositions that do not contain the polyethertriamine.

Preservative compositions according to the present invention comprise (a) 1,2 benzisothiazolin-3-one and (b) at least one compound of the formula I:

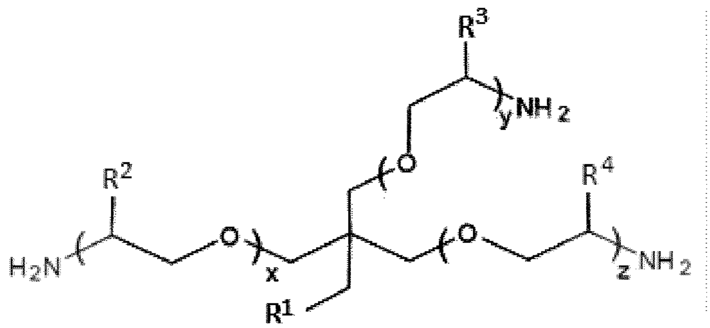

I,

wherein $R^1$ is H or $C_1$ to $C_9$ alkyl, $R^2$, $R^3$, and $R^4$ are independently H or $CH_3$, and x, y, and z are independently 1 to 10, and wherein (a) and (b) are present in a weight ratio (a):(b) of from 1:50 to 2:3. In a preferred aspect of the invention, x, y, and z are independently 1 to 5. In another preferred aspect of the invention, x, y, and z are independently 1, 2, or 3. In a further preferred aspect of the invention, x, y, and z, are independently 1, 2, or 3, and $x + y + z \geq 5$ or 6. A preferred polyethertriamine of the formula I is Jeffamine® T403 polyetheramine from Huntsman.

In preferred embodiments of the present invention, (a) and (b) may be present in a weight ratio (a):(b) of from 1:50 to 1:2, or in a weight ratio (a):(b) of from 1:25 to 1:3. In other embodiments of the invention, (a) and (b) may be present in a weight ratio (a):(b) of from 5:95 to 33:67, or of from 1:40 to 1:2, 1:30 to 1:2, 1:20 to 1:2, or 1:20 to 1:3. Preservative compositions according to the invention may also comprise (a) and (b) in a weight ratio (a):(b) defined by any combination of the foregoing ratios.

The preservative composition according to the present invention may suitably be formulated as a preservative concentrate, wherein the concentrate comprises 1 to 45% w/w of (a), based on the weight of the concentrate. The concentrate may also be formulated to contain 1 to 40% w/w, 3 to 40% w/w, 5 to 40% w/w, 5 to 35% w/w, 5 to 30 % w/w, 10 to 25% w/w, 15 to 25% w/w, or 20 to 25% w/w of (a). Concentrates within the scope of the invention may be formulated to contain (a) within any range defined by any combination of values given as upper or lower limits of the foregoing ranges, e.g. 1 to 15% w/w, 3 to 10% w/w, 20 to 45% w/w, etc.

The preservative composition may further comprise one or more co-biocides, for example one or more fungicides, bactericides, or algaecides, wherein the concentrate comprises 1 to 50% w/w of the co-biocide, based on the weight of the concentrate. Suitable co-biocides include fungicides like propiconazole, IPBC, sodium pyrithione, zinc pyrithione, OIT, and related compounds to close fungal efficacy gaps that could exist for certain end-uses.

The preservative compositions may contain one or more additives. Suitable additives include water, surfactants, emulsifiers, acidifiers, dispersants, stabilizers, buffers, pH regulators, organic solvents, dyes, fragrances, and pigments. A typical formulation minimally will contain, in addition to (a) and (b), water and/or an organic solvent.

The preservative composition may take the form of a solution, with the BIT dissolved in the polyethertriamine. BIT is generally soluble at higher pH, for example pH ≥ 10, and will dissolve readily in the polyethertriamine (e.g, polyetheretriamine T403, pH ~ 11.5). In other embodiments, the preservative composition may be formulated as a suspension, emulsion, or dispersion as needed to incorporate partly-soluble or insoluble components including co-biocides. The pH of the preservative composition may be varied from acidic to basic depending on the desired incorporation of one or more components, including the BIT and/or further co-biocides, in solution, emulsion, dispersion, or suspension.

In one embodiment the BIT is pre-dissolved in caustic or glycol and then the pH is raised with caustic until the BIT forms its water-soluble ammonium salt. In another embodiment, BIT is pre-dissolved in polyethyleneglycol and the pH is raised by addition of the polyethertriamine. With heat it is possible to dissolve BIT powder (85%) in polyethertriamine T403 at lower concentrations. In a further embodiment, the BIT and polyetheramine are dissolved in water or a solution of potassium hydroxide. In all these embodiments, the resulting product is a solution.

The pH of the preservative composition can be lowered to incorporate another pH sensitive component, for example, a co-biocide, e.g., a fungicide, that degrades at the elevated pH necessary to dissolve the BIT in the polyethertriamine. In such formulations the polyethertriamine could be suspended or dispersed with appropriate surfactants and/or rheology modifiers.

The preservative compositions of the invention are suitably incorporated into industrial materials to impart wet-state preservation. Industrial materials in need of such preservation include paints, colorants, coatings, plasters, adhesives, sealants, caulks, mineral slurries, pigments, pigment slurries, concrete, polymer emulsions, polymer dispersions, inks, sizes, agricultural pesticide formulations, household coating products, personal care products, cooling lubricants, heat transfer liquids, metal working fluids, oil concentrates, varnishes, sealing compositions, leather auxiliaries, paper coating agents, and cosmetics.

Industrial materials according to the invention therefore comprise a preservative, the preservative comprising a combination of (a) at least one isothiazolin-3-one and (b) at least one compound of the formula I:

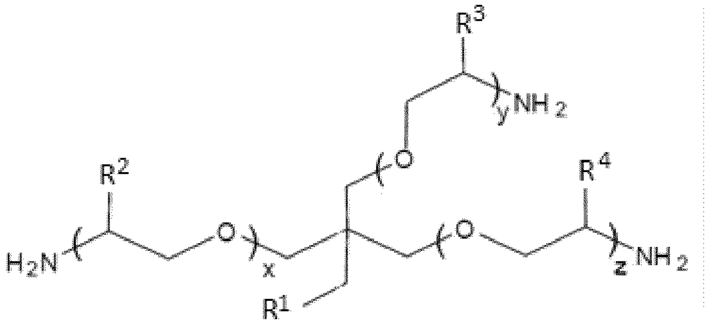

I,

wherein $R^1$, $R^2$, $R^3$, $R^4$, x, y, and z are as previously defined, wherein (a) and (b) are present in a weight ratio (a):(b) of from 1:50 to 40:60, and wherein (a) is present in the industrial material in a total amount of less than or equal to about 500 ppm.

In other aspects of the invention, (a) is present in the industrial material in a total amount of less than or equal to 400 ppm, 300 ppm, 200 ppm, or 100 ppm. In further aspects of the invention, (a) is present in the industrial material in a total amount of at least 5 ppm, 10 ppm, 15 ppm, 20 ppm, or 25 ppm. In yet other aspects of the invention, (a) may be present in the industrial material in a total amount of about 5 ppm to about 50 ppm, about 5 ppm to about 40 ppm, about 5 ppm to about 30 ppm, about 10 ppm to about 25 ppm, less than or equal to about 50 ppm, or less than or equal to about 25 ppm. It is further within the scope of the invention that (a) is present in the industrial material within any range defined by any combination of values given as upper or lower limits of the foregoing ranges, e.g. about 5 ppm to about 500 ppm, about 100 ppm to about 500 ppm, about 40 ppm to about 50 ppm, about 5 ppm to about 10 ppm, etc.

The industrial material into which the preservative composition of the present invention is suitably incorporated is preferably a functional fluid. The functional fluid suitably comprises an aqueous base medium plus the preservative of the invention. The preservative can be provided in the form of a concentrate that, upon dilution with water, provides antimicrobial efficacy in the functional fluid.

The preservative compositions of the present invention are suitably used in functional fluids such as polymer emulsions, or other coating compositions, to impart wet state preservation. Polymers useful in polymer emulsions include acrylic and substituted (meth)acrylates, styrene/butadiene, ethylene vinyl acetate, polyvinyl acetate, styrene/butadiene/N-methylol acrylamide, nitrile and copolymers of the aforementioned. Typical functional fluids include coating compositions, such as paints, adhesives, sealants, caulks, mineral and pigment slurries, printing inks, agricultural pesticide formulations, household products, personal care, metal working fluids, and other aqueous based systems.

The industrial material may further comprise one or more co-biocides selected from the group consisting of fungicides, bactericides, and algaecides, wherein the co-biocide is present in the industrial material in an amount of from about 0.001 to about 1.0% w/w based on the total weight of the industrial material.

The invention further relates to a method of preserving an industrial material in the wet state, comprising adding to the industrial material an effective amount of a preservative, the preservative comprising a combination of (a) at least one isothiazolin-3-one and (b) at least one compound of the formula I:

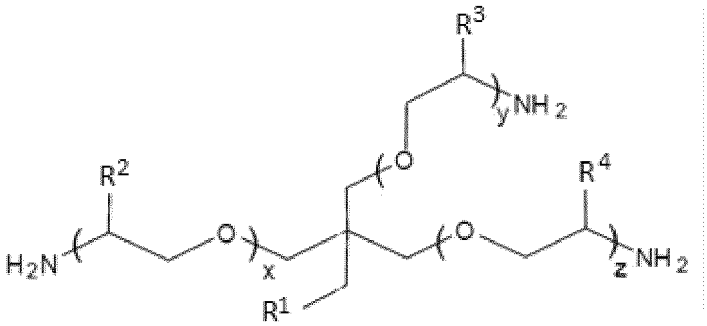

I,

wherein $R^1$, $R^2$, $R^3$, $R^4$, x, y, and z are as previously defined, wherein (a) and (b) are present in a weight ratio (a):(b) of from 1:50 to 40:60.

In one aspect of the method according to the invention, the preservative composition is added to the industrial material such that (a) is present in the industrial material in a total amount of less than or equal to about 500 ppm. In other aspects of the invention, the preservative composition is added to the industrial material such that (a) is present in the industrial material in a total amount of less than or equal to 400 ppm, 300 ppm, 200 ppm, or 100 ppm. In yet other aspects of

the invention, (a) may be present in the industrial material in a total amount of about 5 ppm to about 50 ppm, about 5 ppm to about 40 ppm, about 5 ppm to about 30 ppm, about 10 ppm to about 25 ppm, less than or equal to about 50 ppm, or less than or equal to about 25 ppm. It is further within the scope of the invention that the preservative composition is added to the industrial material such that (a) is present in the industrial material within any range defined by any combination of values given as upper or lower limits of the foregoing ranges, e.g. about 5 ppm to about 500 ppm, about 100 ppm to about 500 ppm, about 40 ppm to about 50 ppm, about 5 ppm to about 10 ppm, etc.

The method of preserving an industrial material according to the invention may comprise inhibiting or preventing growth of microorganisms in the industrial material. The microorganisms to be inhibited or prevented from growing include bacteria, fungi, yeasts, algae, slimes, and mixtures or combinations thereof.

The invention is further described in the Examples given below. All percentages given herein are weight percents based on the total weight of the composition, unless otherwise stated.

EXAMPLES

## EXPERIMENTAL METHODS:

### Minimum Inhibitory Concentration Testing

MICs were determined via microbroth dilution using the following specific test parameters:

| | |
|---|---|
| Format | 96-well plate |
| Strength | ~$1.0*10^5$ CFU/mL |
| Standardization | $OD_{600}$ |
| Incubation Temperature | 35°C |
| Incubation Time | 2 days |
| Test Endpoint | No growth (via turbidity) |
| Test Media | Mueller Hinton Broth (MHB) |

Necessary organism dilutions via $OD_{600}$ were calculated based on $OD_{600}$ of 1.0 being equivalent to $8*10^8$ CFU/mL. Biocide dilutions were performed in 2-fold increments for each assay.

### Synergy Index Calculations

Synergy index (SI) scores were calculated according to the mass action equation below:

$$S.I. = [MIC[A]in\text{-}blend / MIC[A]alone] + [MIC[B]in\text{-}blend / MIC[B]alone]$$

Combinations of ingredients were determined to be synergistic (S.I. ≤ 0.5), additive (S.I. > 0.5 to 1), indifferent (S.I. > 1 to < 2) or antagonistic (S.I. ≥ 2), as defined by EUCAST guidelines[1].

[1] European Committee for Antimicrobial Susceptibility Testing (EUCAST) of the European Society of Clinical Microbiology and Infectious Dieases (ESCMID). EUCAST Definitive Document E.Def 1.2, May 2000: Terminology relating to methods for the determination of susceptibility of bacteria to antimicrobial agents. Clin. Microbiol. Infect. Off. Publ. Eur. Soc. Clin. Microbiol. Infect. Dis. 6, 503-508 (2000).

### Bacterial Challenge Testing (Industrial Strength)

Where industrial strength inoculations are indicated, bacterial challenge testing organisms were *Alcaligenes faecalis* (ATCC #25094), *Enterobacter aerogenes* (ATCC #13048), *Escherichia coli* (ATCC #11229), *Pseudomonas aeruginosa* (ATCC #10145), *Staphylococcus aureus* (ATCC #6538), *Microbacterium paraoxydans* (Troy Isolate), *Burkholderia cenocepacia* (Troy Isolate), *Citrobacter werkmanii* (Troy Isolate), and *Acinetobacter sp.* (Troy Isolate). All bacteria were blended from separate overnight cultures grown in Tryptic Soy Broth (TSB) and mixed at equal CFU via $OD_{600}$ measurements, then diluted to $OD_{600}$ = 7 (~$10^9$ CFU/mL) to create the final bacterial consortium. Each mixture was prepared shortly before each inoculation. Inoculations were performed by adding 0.1mL to 50g of the indicated test sample to give ~$10^7$ CFU/g per inoculation. Viability readings were performed at the indicated intervals following each challenge by applying a small amount of the test sample onto PCA. Plates were then incubated at 32°C for 3-5 days before being evaluated with a semi-quantitative scale. This scale estimates the approximate CFU/g by visual assessment of the colony

density along the streak lines. Readings are recorded as the average of two duplicate semi-quantitative readings from "0" to "4." Samples were mixed before every viability reading and after every inoculation.

| Colony Count | Rating | Approximate CFU/q |
|---|---|---|
| 0 | 0 | <1 |
| 1-10 | 1 | $10\text{-}10^2$ |
| 11-100 | 2 | $10^3\text{-}10^4$ |
| 101-1000 | 3 | $10^4\text{-}10^5$ |
| > 1000 | 4 | $>10^5$ |

Test Biocide Composition

Ref - "1721-88"

| Chemical Name | Percentage | CAS# |
|---|---|---|
| Jeffamine T403 | 50% | - |
| Mergal BIT (84.5%) | 11.83% | 2634-33-5 |
| Polyglycol P1000 (Dow) | 38.17% | 25322-69-4 |

Commercial Product Compositions

| Product | Active Content | Carrier |
|---|---|---|
| Mergal BIT20X | 20% BIT | Glycolic solution |
| Mergal K10N | 10% BIT | Water |

Unpreserved Matrices

Unpreserved test matrices of paint and colorant were obtained from the following Troy projects:

| Troy Code | Sample Type |
|---|---|
| U19-0785-4 | Interior Paint #1 |
| U20-0586-1 | Colorant (Black) |
| U20-0586-2 | Colorant (Red) |

Example 1 (reference example not according to the invention)

MIC values for Mergal BIT20X (20% BIT), individual amines, and 1:1 mixtures of amines and Mergal BIT20X were determined against the test organism *Pseudomonas aeruginosa* (ATCC 10145) using 96-well microbroth dilution methodology. The MIC values are reported in Table 1 on product level. All amines except the two tested polyethertriamines (MW703, T403) showed additive behavior with Mergal BIT20X; the polyethertriamines showed highly synergistic behavior with BIT20X.

Table 1

| Tested Amine | *Pseudomonas aeruginosa* (ATCC #10145) MIC, ppm | | | | | | Synergy Index |
|---|---|---|---|---|---|---|---|
| | Mergal BIT20X + Amine (1:1) | | | Amine Only | | | |
| | Rep. 1 | Rep.2 | Avg. | Rep. | Rep. 2 | Avg. | |
| None (BIT20X) | 78 | 156 | 117 | - | - | - | |
| TETA | 156 | 156 | 156 | 625 | 1250 | 938 | 0.75 |
| Jeffadd MW781 | 156 | 313 | 234 | 1250 | 1250 | 1250 | 1.09 |
| Jeffadd MW740 | 156 | 156 | 156 | 2500 | 2500 | 2500 | 0.70 |
| Jeffadd MW750 | 313 | 156 | 234 | 2500 | 2500 | 2500 | 1.05 |
| Jeffadd MW703 | 39 | 20 | 29 | 2500 | 1250 | 1875 | 0.13 |
| Dytek A | 313 | 313 | 313 | 2500 | 2500 | 2500 | 1.40 |
| Jeffamine ED600 | 156 | 156 | 156 | >5000 | >5000 | >5000 | <0.68 |
| Jeffamine D230 | 313 | 313 | 313 | 5000 | 5000 | 5000 | 1.36 |
| Jeffamine T403 | 78 | 78 | 78 | 2500 | 2500 | 2500 | 0.35 |
| Jeffamine M600 | 313 | 313 | 313 | >5000 | >5000 | >5000 | < 1.36 |

Example 2 (reference example not according to the invention)

The combination of the polyethertriamine Jeffamine® T403 and Mergal® BIT20X is broadly synergistic against diverse bacterial organisms. MIC values of Jeffamine T403, Mergal BIT20X, and a 1:1 mixture were measured against the indicated test organisms; the results are presented in Table 2. The blend of T403 and BIT20X ("1 to 1 Mixture"; containing equal parts of each product by weight%) was synergistic against all tested organisms.

Table 2

| Test Organism | Strain Code | MIC, ppm | | | Synergy Index |
|---|---|---|---|---|---|
| | | Jeffamine T403 | Mergal BIT20X | 1 to 1 Mixture | |
| *Escherichia coli* | ATCC #11229 | 1500 | 94 | 47 | 0.27 |
| *Bacillus sp.* | Troy #JZ14 | 51 | 16 | 12 | 0.49 |
| *Staphylococcus aureus* | ATCC #6538 | 3000 | 23 | 23 | 0.50 |
| *Enterobacter aerogenes* | ATCC #13048 | 1500 | 47 | 31 | 0.34 |
| *Pseudomonas plecoglossicida* | Troy #JZ103 | 750 | 250 | 78 | 0.21 |
| *Burkholderia cenocepacia* | Troy #JZ2 | 3000 | 23 | 23 | 0.50 |
| *Microbacterium paraoxydans* | Troy #JZ13 | 563 | 16 | 12 | 0.39 |

Example 3

Synergy of Jeffamine T403 and Mergal BIT20X mixtures from 1:50 to 50:1 were tested against *P. aeruginosa.* Jeffamine T403 was diluted to 20 %w/w before mixing with Mergal BIT20X at the indicated ratios. The results are plotted in Figure 1. Jeffamine T403 and Mergal BIT20X are synergistic at ratios with excess T403. In Figure 1, the x-axis indicates the fractional BIT level in the blend (1 = 100% BIT, 0 = 100% T403, 0.5 = 50% BIT, 50% T403, etc.), the left y-axis is the MIC against *Pseudomonas aeruginosa* (ATCC 10145), and the right y-axis is the calculated Synergy Index (SI). The dotted line indicates the synergy index cutoff as defined by EUCAST guidelines (SI < 0.5). The MIC raw data is presented in Table 3; MIC values are reported on active concentration. Only the compositions wherein BIT and T403 are used in a ratio of from 1:50 to 2:3 are according to the invention. The other compositions are reference examples.

Table 3

| Fractional Amounts | | MIC, *Pseudomonas aeruginosa* (ATCC #10145) | | | | Synergy Index |
|---|---|---|---|---|---|---|
| Mergal BIT20X | 20% T403 | Rep. 1 | Rep. 2 | Rep. 3 | Avg | |
| 0.02 | 0.98 | 600 | 600 | 300 | 500 | 0.52 |
| 0.98 | 0.02 | 38 | 38 | 38 | 38 | 1.18 |
| 0.05 | 0.95 | 150 | 150 | 150 | 150 | 0.30 |
| 0.95 | 0.05 | 38 | 38 | 38 | 38 | 1.14 |
| 0.9 | 0.1 | 38 | 38 | 38 | 38 | 1.08 |
| 0.1 | 0.9 | 75 | 75 | 75 | 75 | 0.27 |
| 0.2 | 0.8 | 75 | 38 | 38 | 50 | 0.34 |
| 0.8 | 0.2 | 38 | 38 | 38 | 38 | 0.96 |
| 1 | 0 | 19 | 38 | 38 | 31 | - |
| 0 | 1 | 2400 | 2400 | 2400 | 2400 | - |
| 0.5 | 0.5 | 38 | 38 | 38 | 38 | 0.61 |
| 0.33 | 0.67 | 38 | 38 | 38 | 38 | 0.41 |
| 0.67 | 0.33 | 38 | 38 | 38 | 38 | 0.81 |
| 0.25 | 0.75 | 38 | 38 | 38 | 38 | 0.31 |
| 0.75 | 0.25 | 38 | 38 | 38 | 38 | 0.90 |

Example 4

Antibacterial performance of standard 10% BIT (reference product "Mergal K10N") and boosted BIT product "1721-88" in one interior paint and two colorants were compared. The samples were inoculated over two weeks with an industrial inoculum. Samples free of growth 7 days following the second inoculation are considered well protected from growth. "1721-88" significantly outperformed pure BIT and enabled BIT to work at significantly lower concentrations; results are presented in Table 4. The "pass level" is defined as the minimum tested product level required to allow the formulation to be free of bacterial growth 7 days after a second ~$10^7$ bacterial challenge with a mixture of industrially important bacteria. The challenge raw data is available in Table 5.

Table 4

| Test Matrix | Minimum Pass Level Through Two Challenges, %w/w([BIT], ppm) | |
|---|---|---|
| | Mergal K10N | "1721-88" (T403:BIT) |
| Interior Paint #1 | >0.40% (>400) | 0.10% (100) |
| Colorant (Red) | 0.30% (300) | 0.015% (15) |
| Colorant (Black) | >0.40% (>400) | 0.20% (200) |

| Description | [BIT], ppm | Days After Challenge | | | | | |
|---|---|---|---|---|---|---|---|
| | | Challenge #1 | | | Challenge #2 | | |
| | | 1 | 2 | 7 | 1 | 2 | 7 |
| Interior Paint #1 | 0 | 4 | 4 | 4 | 4 | 4 | 4 |
| + 0.015% "1721-88" | 15 | 4 | 3 | 3 | 4 | 4 | 4 |
| + 0.05% "1721-88" | 50 | 4 | 3 | 2 | 4 | 4 | 2 |
| + 0.10% "1721-88" | 100 | 4 | 3 | 0 | 4 | 3 | 0 |
| + 0.20% "1721-88" | 200 | 4 | 3 | 0 | 3 | 3 | 0 |
| + 0.30% "1721-88" | 300 | 3 | 2 | 0 | 3 | 3 | 0 |
| + 0.40% "1721-88" | 400 | 3 | 2 | 0 | 3 | 3 | 0 |
| + 0.015% Mergal K10N | 15 | 4 | 3 | 3 | 4 | 4 | 4 |
| + 0.05% Mergal K10N | 50 | 4 | 3 | 3 | 4 | 4 | 3 |
| + 0.10% Mergal K10N | 100 | 4 | 3 | 3 | 4 | 4 | 3 |
| + 0.20% Mergal K10N | 200 | 4 | 3 | 3 | 4 | 3 | 3 |
| + 0.30% Mergal K10N | 300 | 4 | 3 | 1 | 4 | 3 | 2 |
| + 0.40% Mergal K10N | 400 | 3 | 3 | 0 | 4 | 3 | 1 |
| Colorant (Red) | 0 | 4 | 3 | 3 | 4 | 3 | 3 |
| + 0.015% "1721-88" | 15 | 3 | 3 | 0 | 4 | 3 | 0 |
| + 0.05% "1721-88" | 50 | 3 | 3 | 0 | 3 | 3 | 0 |

| | | | | | | | |
|---|---|---|---|---|---|---|---|
| + 0.10% "1721-88" | 100 | 3 | 3 | 0 | 3 | 3 | 0 |
| + 0.20% "1721-88" | 200 | 3 | 0 | 0 | 3 | 3 | 0 |
| + 0.30% "1721-88" | 300 | 3 | 0 | 0 | 3 | 3 | 0 |
| + 0.40% "1721-88" | 400 | 3 | 0 | 0 | 3 | 2 | 0 |
| + 0.015% Mergal K10N | 15 | 3 | 3 | 3 | 3 | 3 | 3 |
| + 0.05% Mergal K10N | 50 | 3 | 3 | 2 | 3 | 3 | 2 |
| + 0.10% Mergal K10N | 100 | 3 | 3 | 1 | 3 | 3 | 2 |
| + 0.20% Mergal K10N | 200 | 3 | 3 | 0 | 3 | 3 | 1 |
| + 0.30% Mergal K10N | 300 | 3 | 3 | 0 | 3 | 3 | 0 |
| + 0.40% Mergal K10N | 400 | 3 | 3 | 0 | 3 | 3 | 0 |
| Colorant (Black) | 0 | 4 | 3 | 3 | 4 | 4 | 4 |
| + 0.015% "1721-88" | 15 | 3 | 3 | 3 | 4 | 4 | 4 |
| + 0.05% "1721-88" | 50 | 3 | 3 | 3 | 3 | 3 | 3 |
| + 0.10% "1721-88" | 100 | 3 | 0 | 1 | 3 | 3 | 3 |
| + 0.20% "1721-88" | 200 | 3 | 0 | 0 | 3 | 2 | 0 |
| + 0.30% "1721-88" | 300 | 3 | 0 | 0 | 3 | 1 | 0 |
| + 0.40% "1721-88" | 400 | 3 | 0 | 0 | 3 | 0 | 0 |
| + 0.015% Mergal K10N | 15 | 3 | 3 | 3 | 4 | 4 | 4 |
| + 0.05% Mergal K10N | 50 | 3 | 3 | 3 | 4 | 4 | 4 |
| + 0.10% Mergal K10N | 100 | 3 | 3 | 3 | 3 | 3 | 3 |
| + 0.20% Mergal K10N | 200 | 3 | 3 | 3 | 3 | 3 | 3 |
| + 0.30% Mergal K10N | 300 | 3 | 3 | 3 | 3 | 3 | 3 |
| + 0.40% Mergal K10N | 400 | 3 | 3 | 3 | 3 | 3 | 3 |

Table 5

## Claims

1. A preservative composition comprising (a) 1,2-benzisothiazolin-3-one (BIT) and (b) at least one compound of the formula I:

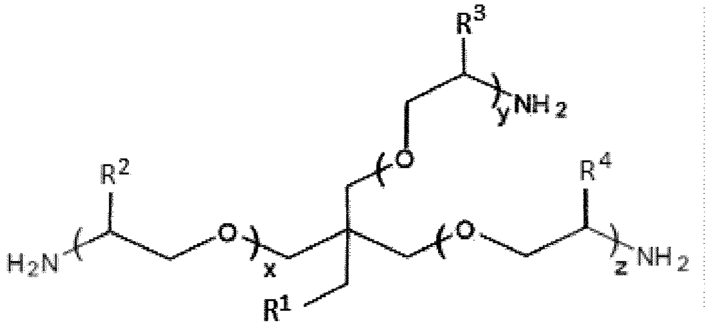

I.

wherein R’ is H or $C_1$ to $C_9$ alkyl, $R^2$, $R^3$, and $R^4$ are independently H or $CH_3$, and x, y, and z are independently 1 to 10, and wherein (a) and (b) are present in a weight ratio (a):(b) of from 1:50 to 2:3.

**2.** The composition of claim 1wherein (a) and (b) are present in a weight ratio (a):(b) of from 1:50 to 1:2, preferably wherein (a) and (b) are present in a weight ratio (a):(b) of from 1:25 to 25:75.

**3.** A preservative concentrate, comprising the preservative composition of claim 1, wherein the concentrate comprises 1 to 45% w/w of (a), based on the weight of the concentrate.

**4.** The preservative concentrate of claim 3, further comprising one or more co-biocides selected from the group consisting of fungicides, bactericides, and algaecides, wherein the concentrate comprises 1 to 50% w/w of the co-biocide, based on the weight of the concentrate.

**5.** An industrial material comprising a preservative, the preservative comprising a combination of (a) 1,2-benzisothiazolin-3-one (BIT) and (b) at least one compound of the formula I:

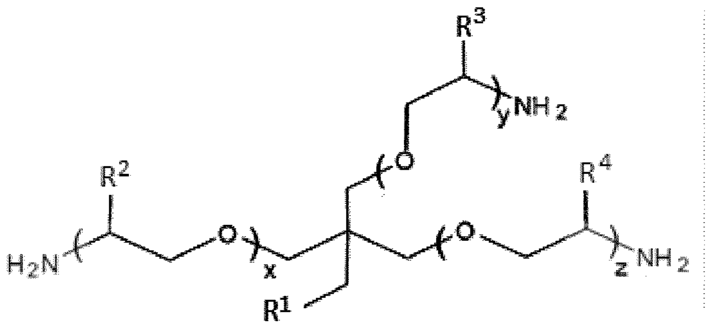

I.

wherein $R^1$ is H or $C_1$ to $C_9$ alkyl, $R^2$, $R^3$, and $R^4$ are independently H or $CH_3$, and x, y, and z are independently 1 to 10, wherein (a) and (b) are present in a weight ratio (a):(b) of from 1:50 to 2:3, and wherein (a) is present in the industrial material in a total amount of less than or equal to about 500 ppm.

**6.** The industrial material of claim 5, wherein (a) is present in the composition in a total amount of about 5 ppm to about 50 ppm, preferably

wherein (a) is present in the composition in a total amount of about 5 ppm to about 30 ppm, more preferably wherein (a) is present in the composition in a total amount of about 10 ppm to about 25 ppm.

**7.** The industrial material of claim 5, wherein (a) is present in the composition in a total amount of less than about 50 ppm, preferably
wherein (a) is present in the composition in a total amount of less than about 25 ppm.

**8.** The industrial material of claim 5,

(i) comprising an emulsion of a polymer selected from the group consisting of acrylates, substituted (meth)acrylates, styrene/butadiene, ethylene/vinyl acetate, polyvinyl acetate, styrene/butadiene/N-methylol acrylamide, nitriles, and mixtures or copolymers thereof, or
(ii) further comprising one or more co-biocides selected from the group consisting of fungicides, bactericides, and algaecides, wherein the co-biocide is present in said composition in an amount of from about 0.001 to about 1.0% w/w based on the total weight of said composition, or
(iii) selected from the group consisting of paints, colorants, coatings, plasters, adhesives, sealants, caulks, mineral slurries, pigments, pigment slurries, concrete, polymer emulsions, polymer dispersions, inks, sizes, agricultural pesticide formulations, household coating products, personal care products, cooling lubricants, heat transfer liquids, metal working fluids, oil concentrates, varnishes, sealing compositions, leather auxiliaries, paper coating agents, and cosmetics.

**9.** The composition of claim 1, wherein x, y, and z are independently 1 to 5, preferably

wherein x, y, and z are independently 1, 2, or 3, more preferably
wherein $x + y + z = 5$ or 6.

**10.** The composition of claim 2,

(i) wherein (a) and (b) are present in a weight ratio (a):(b) of from 5:95 to 33:67, or
(ii) wherein (a) and (b) are present in a weight ratio (a):(b) of from 1:40 to 1:2, preferably wherein (a) and (b) are present in a weight ratio (a):(b) of from 1:30 to 1:2, more preferably wherein (a) and (b) are present in a weight ratio (a):(b) of from 1:20 to 1:2, most preferably wherein (a) and (b) are present in a weight ratio (a):(b) of from 1:20 to 1:3.

**11.** A method of preserving an industrial material in the wet state, comprising adding to the industrial material an effective amount of the preservative composition of claim 1.

**12.** The method of claim 11, wherein the industrial material is selected from the group consisting of paints, coatings, plasters, adhesives, sealants, caulks, mineral slurries, pigments, pigment slurries, concrete, polymer emulsions, polymer dispersions, inks, sizes, agricultural pesticide formulations, household cleaning products, personal care products, cooling lubricants, heat transfer liquids, metal working fluids, oil concentrates, varnishes, sealing compositions, leather auxiliaries, paper coating agents, cosmetics and preservatives for such industrial materials.

**13.** The method of claim 11, comprising inhibiting or preventing growth of microorganisms in the industrial material, preferably
wherein the microorganisms are selected from the group consisting of bacteria, fungi, yeasts, algae, slimes, and mixtures thereof.

**14.** The industrial material of claim 5, wherein (a) is present in the material in a total amount of about 5 ppm to about 50 ppm, preferably

wherein BIT is present in the material in a total amount of about 5 ppm to about 30 ppm, more preferably
wherein BIT is present in the material in a total amount of about 10 ppm to about 25 ppm.

**15.** The industrial material of claim 5, wherein BIT is present in the material in a total amount of less than about 50 ppm, preferably
wherein BIT is present in the material in a total amount of less than about 25 ppm.

## Patentansprüche

**1.** Konservierungsmittel-Zusammensetzung, die (a) 1,2-Benzisothiazolin-3-on (BIT) und (b) mindestens eine Verbindung nach Formel I aufweist:

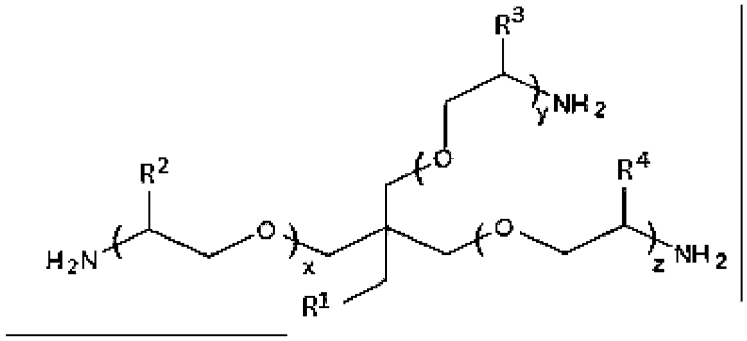

I,

wobei $R^1$ H oder ein $C_1$- bis $C^9$-Alkyl ist, $R^2$, $R^3$ und $R^4$ unabhängig voneinander H oder $CH_3$ sind und x, y und z unabhängig voneinander 1 bis 10 sind und wobei (a) und (b) in einem Gewichtsverhältnis (a):(b) von 1:50 bis 2:3 vorhanden sind.

2. Zusammensetzung nach Anspruch 1, wobei (a) und (b) in einem Gewichtsverhältnis (a):(b) von 1:50 bis 1:2 vorhanden sind, bevorzugt wobei (a) und (b) in einem Gewichtsverhältnis (a):(b) von 1:25 bis 25:75 vorhanden sind.

3. Konservierungsmittel-Konzentrat, das die Konservierungsmittel-Zusammensetzung nach Anspruch 1 aufweist, wobei das Konzentrat bezogen auf das Gewicht des Konzentrats 1 bis 45 Gewichtsprozent an (a) aufweist.

4. Konservierungsmittel-Konzentrat nach Anspruch 3, das ferner ein oder mehrere Co-Biozide aufweist, die ausgewählt sind aus der Gruppe bestehend aus Fungiziden, Bakteriziden und Algiziden, wobei das Konzentrat bezogen auf das Gewicht des Konzentrats 1 bis 50 Gewichtsprozent an dem Co-Biozid aufweist.

5. Industriematerial, das ein Konservierungsmittel aufweist, wobei das Konservierungsmittel eine Kombination aus (a) 1,2-Benzisothiazolin-3-on (BIT) und (b) mindestens einer Verbindung nach Formel I aufweist:

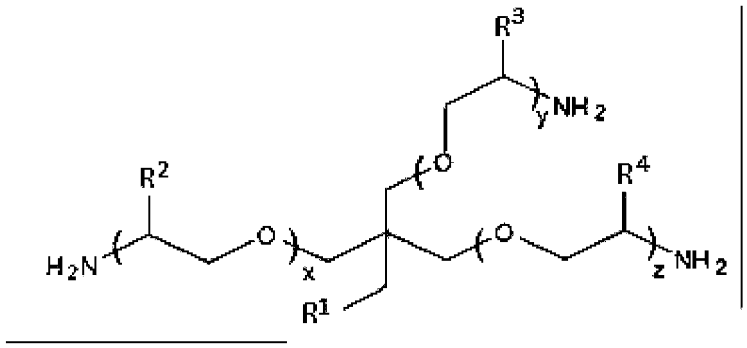

I,

wobei $R^1$ H oder ein $C_1$- bis $C_9$-Alkyl ist, $R^2$, $R^3$ und $R^4$ unabhängig voneinander H oder $CH_3$ sind und x, y und z unabhängig voneinander 1 bis 10 sind, wobei (a) und (b) in einem Gewichtsverhältnis (a):(b) von 1:50 bis 2:3 vorhanden sind und wobei (a) in dem Industriematerial in einer Gesamtmenge von weniger als oder gleich ungefähr 500 ppm vorhanden ist.

6. Industriematerial nach Anspruch 5, wobei (a) in der Zusammensetzung in einer Gesamtmenge von ungefähr 5 ppm bis ungefähr 50 ppm vorhanden ist, bevorzugt

wobei (a) in der Zusammensetzung in einer Gesamtmenge von ungefähr 5 ppm bis ungefähr 30 ppm vorhanden ist, bevorzugter
wobei (a) in der Zusammensetzung in einer Gesamtmenge von ungefähr 10 ppm bis ungefähr 25 ppm vorhanden ist.

7. Industriematerial nach Anspruch 5, wobei (a) in der Zusammensetzung in einer Gesamtmenge von weniger als ungefähr 50 ppm vorhanden ist, bevorzugt
wobei (a) in der Zusammensetzung in einer Gesamtmenge von weniger als ungefähr 25 ppm vorhanden ist.

**8.** Industriematerial nach Anspruch 5,

(i) das eine Emulsion eines Polymers aufweist, das ausgewählt ist aus der Gruppe bestehend aus Acrylaten, substituierten (Meth)acrylaten, Styrol/Butadien, Ethylen/Vinylacetat, Polyvinylacetat, Styrol/Butadien/N-Methylolacrylamid, Nitrilen und Gemischen oder Copolymeren davon, oder
(ii) das ferner ein oder mehrere Co-Biozide aufweist, die ausgewählt sind aus der Gruppe bestehend aus Fungiziden, Bakteriziden und Algiziden, wobei das Co-Biozid in der Zusammensetzung bezogen auf das Gesamtgewicht der Zusammensetzung in einer Menge von ungefähr 0,001 bis ungefähr 1,0 Gewichtsprozent vorhanden ist, oder
(iii) das ausgewählt ist aus der Gruppe bestehend aus Anstrichmitteln, Farbmitteln, Beschichtungen, Putzen, Klebstoffen, Dichtungsmitteln, Fugenmassen, Mineralaufschlämmungen, Pigmenten, Pigmentaufschlämmungen, Beton, Polymeremulsionen, Polymerdispersionen, Tinten, Schlichten, landwirtschaftlichen Pestizidformulierungen, Haushaltsbeschichtungsprodukten, Körperpflegeprodukten, Kühlschmiermitteln, Wärmeübertragungsflüssigkeiten, Metallbearbeitungsflüssigkeiten, Ölkonzentraten, Lacken, Dichtungszusammensetzungen, Lederhilfsmitteln, Papierbeschichtungsmitteln und Kosmetika.

**9.** Zusammensetzung nach Anspruch 1, wobei x, y und z unabhängig voneinander 1 bis 5 sind, bevorzugt

wobei x, y und z unabhängig voneinander 1, 2 oder 3 sind, bevorzugter
wobei x + y + z = 5 oder 6 ist.

**10.** Zusammensetzung nach Anspruch 2,

(i) wobei (a) und (b) in einem Gewichtsverhältnis (a):(b) von 5:95 bis 33:67 vorhanden sind oder
(ii) wobei (a) und (b) in einem Gewichtsverhältnis (a):(b) von 1:40 bis 1:2 vorhanden sind, bevorzugt
wobei (a) und (b) in einem Gewichtsverhältnis (a):(b) von 1:30 bis 1:2 vorhanden sind, bevorzugter
wobei (a) und (b) in einem Gewichtsverhältnis (a):(b) von 1:20 bis 1:2 vorhanden sind, am meisten bevorzugt
wobei (a) und (b) in einem Gewichtsverhältnis (a):(b) von 1:20 bis 1:3 vorhanden sind.

**11.** Verfahren zum Konservieren eines Industriematerials im Nasszustand, umfassend Hinzugeben einer wirksamen Menge der Konservierungsmittel-Zusammensetzung nach Anspruch 1 zu dem Industriematerial.

**12.** Verfahren nach Anspruch 11, wobei das Industriematerial ausgewählt ist aus der Gruppe bestehend aus Anstrichmitteln, Beschichtungen, Putzen, Klebstoffen, Dichtungsmitteln, Fugenmassen, Mineralaufschlämmungen, Pigmenten, Pigmentaufschlämmungen, Beton, Polymeremulsionen, Polymerdispersionen, Tinten, Schlichten, landwirtschaftlichen Pestizidformulierungen, Haushaltsreinigungsprodukten, Körperpflegeprodukten, Kühlschmiermitteln, Wärmeübertragungsflüssigkeiten, Metallbearbeitungsflüssigkeiten, Ölkonzentraten, Lacken, Dichtungszusammensetzungen, Lederhilfsmitteln, Papierbeschichtungsmitteln, Kosmetika und Konservierungsmitteln für solche Industriematerialien.

**13.** Verfahren nach Anspruch **11,** umfassend Hemmen oder Verhindern des Wachstums von Mikroorganismen in dem Industriematerial, bevorzugt
wobei die Mikroorganismen ausgewählt sind aus der Gruppe bestehend aus Bakterien, Pilzen, Hefen, Algen, Schleimen und Gemischen davon.

**14.** Industriematerial nach Anspruch 5, wobei (a) in dem Material in einer Gesamtmenge von ungefähr 5 ppm bis ungefähr 50 ppm vorhanden ist, bevorzugt

wobei BIT in dem Material in einer Gesamtmenge von ungefähr 5 ppm bis ungefähr 30 ppm vorhanden ist, bevorzugter
wobei BIT in dem Material in einer Gesamtmenge von ungefähr 10 ppm bis ungefähr 25 ppm vorhanden ist.

**15.** Industriematerial nach Anspruch 5, wobei BIT in dem Material in einer Gesamtmenge von weniger als ungefähr 50 ppm vorhanden ist, bevorzugt
wobei BIT in dem Material in einer Gesamtmenge von weniger als ungefähr 25 ppm vorhanden ist.

## Revendications

**1.** Composition de conservateur comprenant (a) de la 1,2-benzisothiazolin-3-one (BIT) et (b) au moins un composé de formule I:

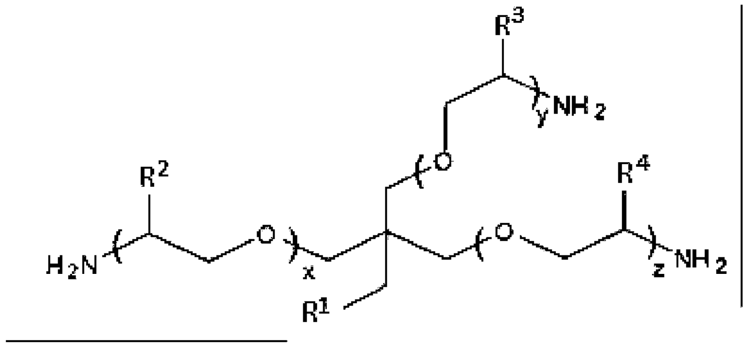

I,

dans laquelle $R^1$ représente H ou un groupe alkyle en $C_1$ à $C_9$, $R^2$, $R^3$ et $R^4$ représentent indépendamment H ou $CH_3$, et x, y et z représentent indépendamment 1 à 10, et dans laquelle (a) et (b) sont présents dans un rapport pondéral (a):(b) compris entre 1:50 et 2:3.

**2.** Composition selon la revendication 1, dans laquelle (a) et (b) sont présents dans un rapport pondéral (a):(b) compris entre 1:50 et 1:2, de préférence dans laquelle (a) et (b) sont présents dans un rapport pondéral (a):(b) compris entre 1:25 et 25:75.

**3.** Concentré de conservateur, comprenant la composition de conservateur selon la revendication 1, dans lequel le concentré comprend 1 à 45 % en poids de (a), sur la base du poids du concentré.

**4.** Concentré de conservateur selon la revendication 3, comprenant en outre un ou plusieurs co-biocides choisis dans le groupe constitué par les fongicides, les bactéricides et les algicides, dans lequel le concentré comprend 1 à 50 % en poids du co-biocide, sur la base du poids du concentré.

**5.** Matériau industriel comprenant un conservateur, le conservateur comprenant une combinaison de (a) 1,2-benzisothiazolin-3-one (BIT) et (b) au moins un composé de formule I:

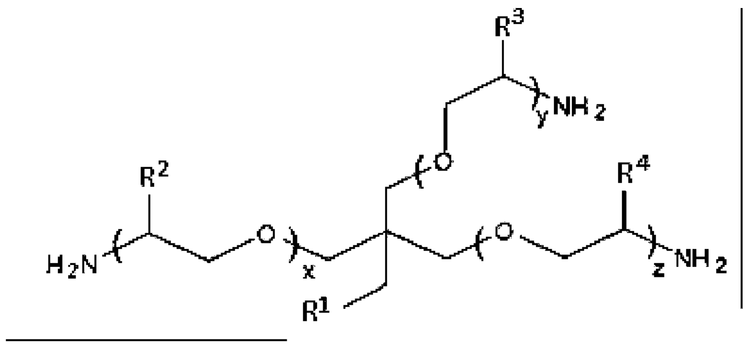

I,

dans lequel $R^1$ représente H ou un groupe alkyle en $C_1$ à $C_9$, $R^2$, $R^3$ et $R^4$ représentent indépendamment H ou $CH_3$, et x, y et z représentent indépendamment 1 à 10, dans lequel (a) et (b) sont présents dans un rapport pondéral (a):(b) compris entre 1:50 et 2:3, et dans lequel (a) est présent dans le matériau industriel en une quantité totale inférieure ou égale à environ 500 ppm.

**6.** Matériau industriel selon la revendication 5, dans lequel (a) est présent dans la composition en une quantité totale d'environ 5 ppm à environ 50 ppm, de préférence

dans lequel (a) est présent dans la composition en une quantité totale d'environ 5 ppm à environ 30 ppm, de préférence

dans lequel (a) est présent dans la composition en une quantité totale d'environ 10 ppm à environ 25 ppm.

**7.** Matériau industriel selon la revendication 5, dans lequel (a) est présent dans la composition en une quantité totale inférieure à environ 50 ppm, de préférence
dans lequel (a) est présent dans la composition en une quantité totale inférieure à environ 25 ppm.

**8.** Matériau industriel selon la revendication 5,

(i) comprenant une émulsion d'un polymère choisi dans le groupe constitué par les acrylates, les (méth)acrylates substitués, le styrène/butadiène, l'éthylène/acétate de vinyle, l'acétate de polyvinyle, styrène/butadiène/N-méthylol acrylamide, les nitriles et leurs mélanges ou copolymères, ou
(ii) comprenant en outre un ou plusieurs co-biocides choisis dans le groupe constitué par les fongicides, les bactéricides, et les algicides, dans lequel le co-biocide est présent dans ladite composition en une quantité d'environ 0,001 à environ 1,0 % en poids par rapport au poids total de ladite composition, ou
(iii) choisi dans le groupe constitué par les peintures, les colorants, les revêtements, les plâtres, les adhésifs, les produits d'étanchéité, les enduits, les boues minérales, les pigments, les boues pigmentaires, le béton, les émulsions de polymères, les dispersions de polymères, les encres, les apprêts, les préparations pesticides agricoles, les produits de revêtement ménager, les produits de soins personnels, les lubrifiants réfrigérants, les liquides de transfert de chaleur, les fluides de travail des métaux, les concentrés d'huile, les vernis, les compositions d'étanchéité, les auxiliaires du cuir, les agents de revêtement du papier, et les cosmétiques.

**9.** Composition selon la revendication 1, dans laquelle x, y et z représentent indépendamment 1 à 5, de préférence

dans laquelle x, y et z représentent indépendamment 1, 2 ou 3, de préférence
dans laquelle x + y + z = 5 ou 6.

**10.** Composition selon la revendication 2,

(i) dans laquelle (a) et (b) sont présents dans un rapport pondéral (a):(b) compris entre 5:95 et 33:67, ou
(ii) dans laquelle (a) et (b) sont présents dans un rapport pondéral (a):(b) compris entre 1:40 et 1:2, de préférence dans laquelle (a) et (b) sont présents dans un rapport pondéral (a):(b) compris entre 1:30 et 1:2, de préférence dans laquelle (a) et (b) sont présents dans un rapport pondéral (a):(b) compris entre 1:20 et 1:2, de préférence dans laquelle (a) et (b) sont présents dans un rapport pondéral (a):(b) compris entre 1:20 et 1:3.

**11.** Procédé de conservation d'un matériau industriel à l'état humide, comprenant l'ajout au matériau industriel d'une quantité efficace de la composition de conservateur selon la revendication 1.

**12.** Procédé selon la revendication 11, dans lequel le matériau industriel est choisi dans le groupe constitué par les peintures, les revêtements, les plâtres, les adhésifs, les produits d'étanchéité, les enduits, les boues minérales, les pigments, les boues pigmentaires, le béton, les émulsions de polymères, les dispersions de polymères, les encres, les apprêts, les préparations pesticides agricoles, les produits d'entretien ménager, les produits de soins personnels, les lubrifiants réfrigérants, les liquides de transfert de chaleur, les fluides de travail des métaux, les concentrés d'huile, les vernis, les compositions d'étanchéité, les auxiliaires du cuir, les agents de revêtement du papier, les cosmétiques et les conservateurs pour de tels matériaux industriels.

**13.** Procédé selon la revendication 11, comprenant l'inhibition ou la prévention de la croissance de micro-organismes dans le matériau industriel, de préférence
dans lequel les micro-organismes sont choisis dans le groupe constitué par les bactéries, les champignons, les levures, les algues, les boues, et leurs mélanges.

**14.** Matériau industriel selon la revendication 5, dans lequel (a) est présent dans le matériau en une quantité totale d'environ 5 ppm à environ 50 ppm, de préférence

dans lequel la BIT est présente dans le matériau en une quantité totale d'environ 5 ppm à environ 30 ppm, de préférence
dans lequel la BIT est présente dans le matériau en une quantité totale d'environ 10 ppm à environ 25 ppm.

**15.** Matériau industriel selon la revendication 5, dans lequel la BIT est présente dans le matériau en une quantité totale

inférieure à environ 50 ppm, de préférence dans lequel la BIT est présente dans le matériau en une quantité totale inférieure à environ 25 ppm.

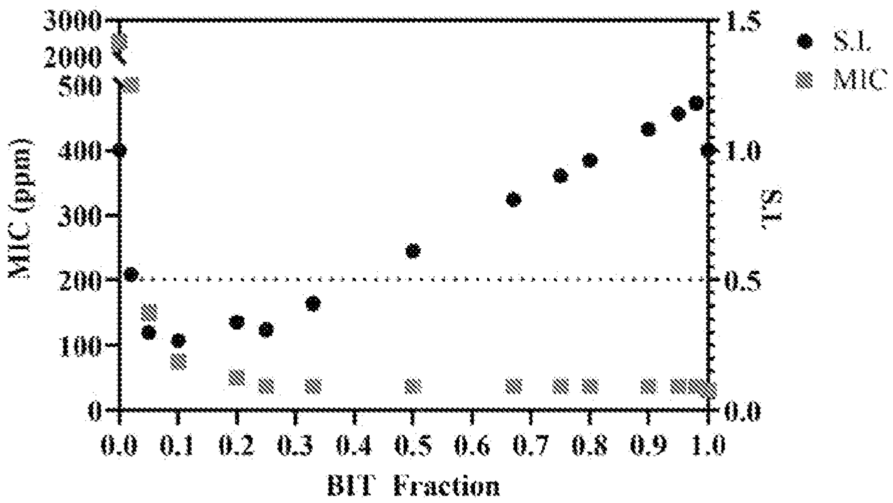
3000
2000
500
400
300
200
100
0
MIC (ppm)
1.5
1.0
0.5
0.0
S.I.
0.0 0.1 0.2 0.3 0.4 0.5 0.6 0.7 0.8 0.9 1.0
BIT Fraction
S.I.
MIC

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2010167028 A1
- EP 0482328 A1


### Non-patent literature cited in the description


- Terminology relating to methods for the determination of susceptibility of bacteria to antimicrobial agents. *Clin. Microbiol. Infect. Off. Publ. Eur. Soc. Clin. Microbiol. Infect. Dis.*, 2000, vol. 6, 503-508
- *CHEMICAL ABSTRACTS*, 2634-33-5
- *CHEMICAL ABSTRACTS*, 25322-69-4